# EUROPEAN PATENT APPLICATION

(11) **EP 4 400 658 A1**
(43) Date of publication of application: **17.07.2024**
(21) Application number: 24151531.1
(22) Date of filing: 12.01.2024
(51) Int. Cl.: E02F 9/20, E02F 3/96

(54) **REMOTE CONTROLLED DEMOLITION ROBOT WITH IMPROVED STEERING AND CONTROL PROPERTIES**

(30) Priority: 12.01.2023 SE 2350020
(71) Applicant: Brokk Aktiebolag, 931 27 Skelleftea (SE)
(72) Inventor: NYSTRÖM, Andreas, 934 93 Kusmark (SE)
(74) Representative: Zacco Sweden AB

(57) **Abstract**

The invention relates to a remote-controlled demolition robot (1) comprising a control unit (4), an undercarriage (7) with propulsion means (8), an upper carriage (6) with a maneuverable arm means (11) and a remote control unit (3) having a first and second control lever (B1, B2) and an operating mode control switch (18) which allows an operator (2) to switch between alternative operating modes, the remote control unit being arranged to give commands via the operating mode control switch to the control unit (4) to control the demolition robot in alternative operating modes by means of the control levers (B1, B2). Distinctive to the invention is that the operating mode selector switch (18) on the remote control unit (3) forms a primary operating mode control switch and that one of the control levers (B2) has a complementary secondary operating mode control switch (20) with such a location on the control lever (B2) that it is accessible for activation without the operator (2) needs to release his grip on the control lever and which, when activated, momentarily switches the control unit (4) from the operating mode dedicated by the primary operating mode selector switch (18) to an alternative momentary operating mode, the switching being active as long as the secondary operating mode control switch (20) is activated.

## Description

### Technical area

The present invention relates to a remote-controlled demolition robot with improved steering and control properties according to the preamble of claim 1 and a method to control and operate a remote-controlled demolition robot according to claim 11 and a remote control unit with a secondary operating mode selector switch on a control lever according to claim 12.

### Background

A remote controlled demolition robot has a variety of control options such as controlling a hydraulically driven tool, arm means, propulsion means and outriggers. All these different control options are assigned to two control levers (joysticks) and a few buttons and controls on a remote control unit. In order for an operator to be able to use all the control options, they are divided into different selectable modes, so-called operating modes (driving modes) where the controls control different movements depending on which operating mode the demolition robot is working in. This makes it possible for an operator to control all the functions of the demolition robot with essentially only two control levers.

Switching between different operating modes takes place via an operating mode selector switch that is normally located on the remote control unit, which means that the operator must release his grip from one of the control levers to switch operating mode by means of the operating mode selector switch on the remote control unit. Thus, switching between different operating modes takes a lot of time and also prevents that certain movements can be performed essentially sequentially and in an efficient order, for example in cases where a movement is controlled in a first operating mode and another movement is controlled in another second operating mode. Each selected operating mode determines which control input corresponds to current operator commands for the control levers. These aggravating circumstances when switching operating modes cause the demolition robot to work in a jerky, erratic manner and thus with less efficiently.

It would therefore be desirable to provide a demolition robot that does not suffer from the aforementioned problems but can be controlled and maneuvered in a simpler and more efficient manner.

### Summary

An object of the present invention is thus to create a remote-controlled demolition robot which solves this problem and which allows different movements that require switching of operating mode to be performed in a more efficient regular sequence. Another object of the invention is to provide a way to more efficiently control and maneuver a remote controlled demolition robot. A third object of the invention is to provide a remote control unit for a demolition robot.

This first object of the invention is solved by a remote-controlled demolition robot which exhibits the features and characteristics stated in claim 1. The second object of the invention is achieved by the method stated in claim 10 and the third object by means of a remote control unit according to claim 12. Other advantages and characteristics of the invention appear from the sub-claims 2-10.

According to one embodiment of the invention, an operating mode selector switch on a remote control unit forms a primary operating mode selector switch and a complementary operating mode selector switch on a control lever forms a secondary operating mode selector switch which is accessible by the operators thumb or fingers for actuation without the operator having to release his grip on the control lever and which, when actuated, momentarily switches a control lever controlling control unit from one of the primary operating mode selector switch dedicates the indicated operating mode of the controller to a momentary alternate operating mode, the changeover being active as long as the secondary operating mode selector switch is activated.

According to another embodiment, the secondary operating mode selector switch is configured to give commands to the control unit to control the demolition robot in an alternative momentary operating mode in which an undercarriage included in the demolition robot or an uppercarriage can be controlled and controlled by means of the control levers.

According to another embodiment, switching to temporary alternative operating mode is limited to the extent that switching can only take place after activation of the secondary operating mode selector switch for a longer time than a predetermined threshold time.

### Brief description of the drawings

In the following, a remote-controlled demolition robot according to the invention is described in more detail, guided by examples of execution shown in the attached drawings, in which;
Fig.1 shows a perspective view of a remote-controlled demolition robot according to the invention.
Fig.2 shows a perspective view of a remote control unit that is part of a demolition robot according to the invention.
Fig. 2A shows a detail enlarged front view of a right control lever included in the remote control unit and a portion of the control lever provided with an operating mode selector switch where an operator's fingers are intended to be when gripping the control lever.
Fig. 3A, and Fig. 3B show graphically with symbols examples of which controls can be activated and the corresponding control measures that are executed upon activation of the right control lever operating mode selector switch and selection of alternative operating modes, whereby Fig. 3A shows operating mode "undercarriage" and Fig. 3B operating mode " overcarriage".
Fig. 3C a view in detail enlargement from the rear of a right control lever included in the remote control unit in an alternative embodiment of the invention where a secondary operating mode selector switch is constituted by a thumb control switch or in an alternative other embodiment can be constituted by a control function on a top contact which primarily controls another function than the one that controls and switches operating mode in a control unit.
Fig. 4 schematically shows a block diagram of such steering and control functions that can be included in a demolition robot according to the present invention.

### Detailed description

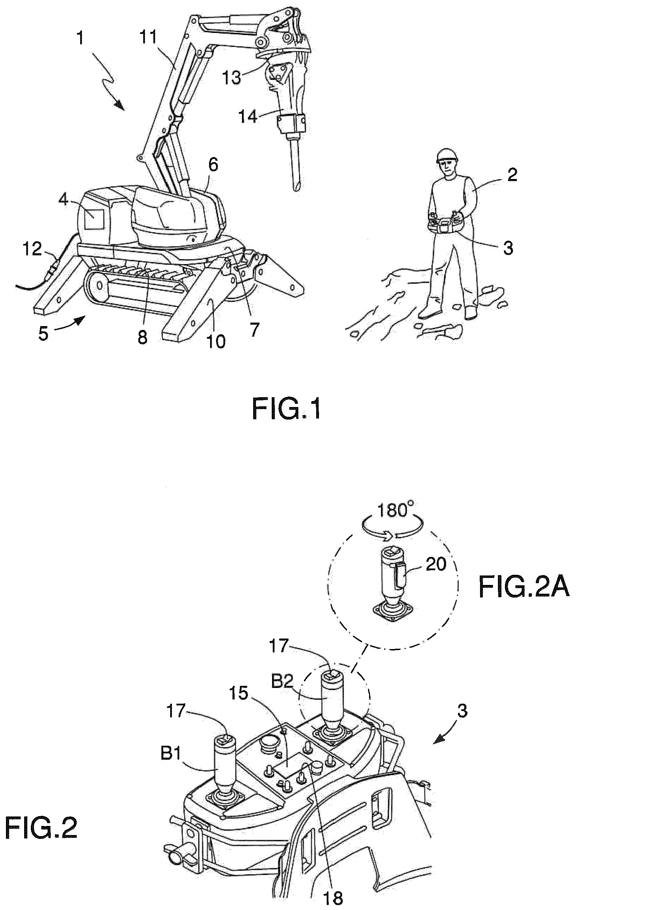

In Fig. 1, a remote-controlled demolition robot 1, hereinafter referred to as demolition robot, is shown. An operator 2 walks next to the demolition robot and remotely controls it wirelessly via a remote control unit 3 which is connected via radio signals to a control unit 4 included in the demolition robot. 5 generally denotes a chassis with a carriage that has an upper carriage 6 and a lower carriage 7. The upper carriage 6 is rotatably mounted on the undercarriage 7 for pivoting in a horizontal plane. The undercarriage 7 is provided with a propulsion device 8 which includes right and left caterpillar tracks. 10 denotes outriggers that are operated by associated hydraulic cylinders and 11 an operable arm means which, consisting of a number of successively jointed arm parts, is supported on the upper carriage 6 and operable by means of a number of hydraulic cylinders operating between the arm parts. 12 denotes a cable intended to be connected to a stationary electrical line network to supply the demolition robot 1 with electrical power. The armature 11 is provided at its free end with a tool holder 13 in which different types of tools 14 can be releasably attached and, where applicable, also connected for hydraulic operation.

In Fig. 2, the remote control unit 3 that is part of the demolition robot 1 is shown in more detail. The remote control unit 3 is configured to provide control information, such as operator commands, to the robot 1 which information is interpreted by the control unit 4 and causes the demolition robot 1 to operate in accordance with the operator's 2 commands. Remote control unit 3 has an operator interface comprising a display unit 15 for providing information to the operator 2 and a plurality of controls for receiving commands from the operator. The controls B1, B2 include a pair of control levers, a left control lever B1 and a right control lever B2. Each control lever B1, B2 can further be provided with a top control switch 17 intended to be operated with the operator's thumbs.

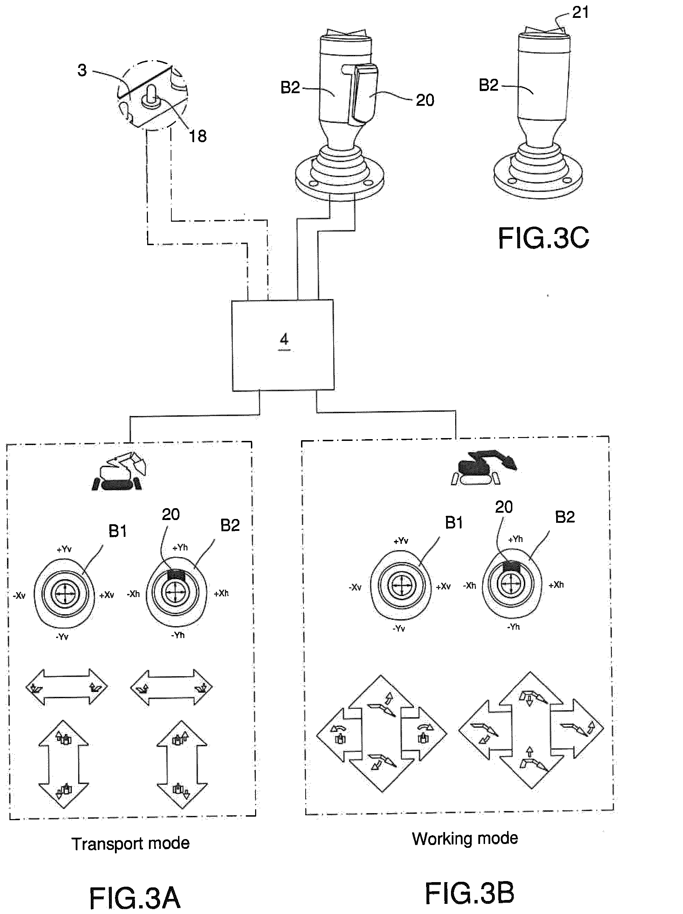

Control levers B1, B2 and top control switches 17 are used to provide control and maneuver commands to the demolition robot 1. A primary operating mode selector switch 18 located on an upper side of the remote control unit 3 is in communication with the control unit 4 and can be used to select one of several alternative operating modes in the control unit 4 for the demolition robot 1, whereby each respective selected operating mode determines which control input corresponds to a current operator command with respect to the selected positions and function control of the control levers B1, B2 and the top control switches 17. Fig. 3A and 3B show examples of two different operating modes, so-called modes that the operator 2 can switch the control unit 4 to via the remote control unit 3. As shown in Fig. 3A, said selectable operating modes can include "transport mode", whereby the demolition robot can be mobile moved by the influence of control levers B1, B2 and associated top control switch 17 or in Fig. 3B "working mode", whereby the arm member 11 can perform maneuvering movements by the influence of control levers B1, B2 and associated top control switch 17.

For example, as shown graphically in Fig. 3A and Fig. 3B: With the primary operating mode selector switch 18 set to the transport position (Fig. 3A), left control lever B1 can operate the left outrigger or left track drive and, correspondingly, right control lever B2 can operate the right outrigger or right ligament operation. With the primary operating mode switch 18 switched to the "working position", the left control lever B1 can operate an outer arm part up/down and swing the turret and thus the weapon member as a whole to the left/right and correspondingly the right control lever can operate an inner arm part up/down and tilt a long out located arm part in/out. Depending on the selected operating mode, the control levers B1, B2 and associated top control switch 17 will control various functions of the demolition robot 1. Each selected operating mode can be displayed by means of symbols on the display unit 15.

With reference to Fig. 2 and particularly the detail magnification in Fig. 2A, it has surprisingly been found appropriate to assign one of the control levers B1, B2, namely the right control lever B2 on its front side a secondary operating mode selector switch 20 in the form of a finger control switch which, when actuated, momentarily switches to one with respect to the position of the primary operating mode selector switch 18 alternatively operating mode for upper carriage 7 and lower carriage 6 respectively, whereby the momentary switching is active as long as the secondary operating mode selector control 20 is activated. The front side of the control lever B2 in this case means that the secondary operating mode selector switch 20 is located on the front side of the right control lever where the operator's 2 fingers rest or within the grip that includes the operator's fingers, i.e. on the opposite side of the support surface of the control lever B2 where the palm of the operator 2 is intended to rest.

The placement of the secondary operating mode selector switch 20 on the face of the control lever B2 enables the operator 2 to activate the secondary operating mode selector switch 20 with his fingers, without releasing control or grip on the control handle B2. In accordance with the invention, the operator 2 is thus assigned a supplementary or secondary operating mode selector switch 20 which can momentarily override the dedicated operating mode of the control unit 4 set by the primary operating mode selector switch 18 and thus makes it very easy for the operator 2 to temporarily switch to an alternative operating mode for the demolition robot 1. the embodiment described here includes these two switchable functions lever control B1, B2 of undercarriage 7 and lever control B1, B2 upper carriage 6 respectively, whereby the changeover is active as long as the secondary operating mode selector switch (20) is activated. A number of other similar exchange alternatives are of course conceivable.

In accordance with the invention, the operating mode selector switch 18 on the control panel of the remote control device 3 may be considered to constitute a primary operating mode selector switch, while the finger control switch on the control lever B2 constitutes a secondary operating mode selector switch 20 which is accessible without the operator 2 needing to release his grip on the current control lever B2.

As can be seen from Figs. 3A and 3B, said secondary operating mode selector switch 20 can include a resilient switch arranged on the control lever B2 which is activated by the action of one or a plurality of the operator's 2 fingers. For example; if the secondary operating mode selector switch 20 on the right control lever B2 is activated by the operator 2 when the primary operating mode selector switch 18 on the remote control unit 3 is switched to "transport mode", see Fig. 3A (wherein the demolition robot can be mobile moved by means of crawler tracks by the action of control levers B1, B2) then switches the demolition robot's control unit 4 momentarily to "work mode", see Fig. 3B (whereby the arm member 11 can be operated by the influence of the control levers B1, B2, whereby the temporary or momentary switching is active as long as the secondary operating mode selector switch 20 is activated.

Another example is if the secondary operating mode selector switch 20 is activated by the operator 2 when the primary operating mode selector switch 18 on the remote control unit 3 is switched to "working mode" see Fig. 3B (whereby the arm member can be operated by influencing the control levers B1, B2) then the demolition robot's control unit 4 switches momentarily to "transport mode", see Fig. 3A whereby the demolition robot can be moved mobilely by means of crawler tracks by actuation of control levers B1, B2) whereby the shift is active as long as the secondary operating mode selector switch 20 is activated

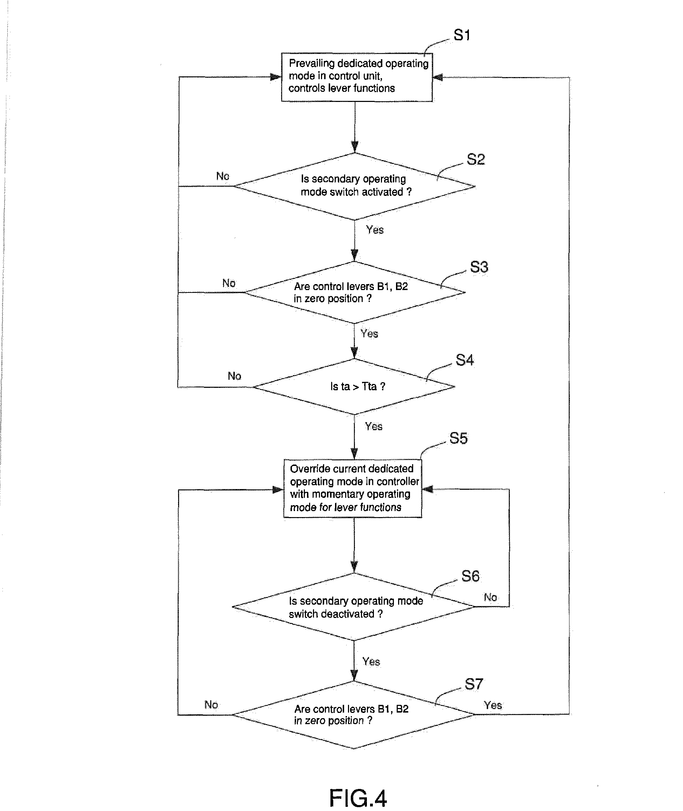

Fig. 4 shows a flowchart that describes an embodiment of the invention and specifies certain logical requirements that must be met before the control unit 4 is temporarily allowed to switch operating mode by activating or deactivating the secondary operating mode selector switch 20.

At step S1, there is a dedicated operating mode in the control unit 4 which is selected through the primary operating mode selector switch 18 on the remote control unit 3. At step S2, the control unit 4 determines whether the secondary operating mode selector switch 20 is activated. If this is not the case, the control unit 4 initiates no change to the current dedicated operating mode in the control unit 4. At step S3, the control unit 4 determines whether the control levers B1, B2 are in the zero position. If this is not the case, the control unit 4 does not initiate any change to the current dedicated operating mode in the control unit 4.

At step S4, the control unit 4 determines whether the secondary operating mode selector switch 20 has been activated during an activation time ta that exceeds a predetermined threshold time Tta, i.e. ta>Tta. If this is not the case, the control unit 4 initiates no change to the current dedicated operating mode in the control unit 4. If, however, this is the case, the control unit 4 initiates step S5 and overrides the current dedicated operating mode in the control unit 4 and replaces it with an instantaneous operating mode in which the control levers B1, B2 steers and controls a different alternative function than the dedicated prevailing one in the control unit, for example by switching from a dedicated prevailing control lever function B1, B2 for upper carriage 7 to a momentary control lever function B1, B2 for lower carriage 6.

At step S6, the control unit 4 determines whether the secondary operating mode selector switch 20 is deactivated, i.e. if the operator has stopped activating the secondary operating mode selector switch 20. If this is not the case, the control unit 4 does not initiate a change of momentary operating mode in the control unit 4. At step S7, the control unit 4 determines whether the control levers B1, B2 are in the zero position. If this is not the case, the control unit 4 initiates no change to the current operating mode in the control unit 4. If, however, this is the case, the control unit 4 initiates, overrides the current operating mode and replaces it with the dedicated operating mode in the control unit 4 in which the control levers B1, B2 return to control and check the dedicated function, for example by switching back from a currently prevailing control lever function B1, B2 for under carriage 6 to a dedicated prevailing control lever function B1, B2 for upper carriage 7.

In an alternative embodiment of the invention, it is of course conceivable that the secondary operating mode control switch 20 does not necessarily need to be a finger control switch which is placed on a front side of the control lever B2 hand grip, but could be given any other alternative location on the control lever which enables an operator to reach and influence the control at the same time as the operator grasps the control lever, for example the control could consist of a thumb control switch, top contact 17 or the like on a control.

According to the invention, the secondary operating mode selector switch 20 could comprise any of the following means; a finger control switch 20, a thumb control switch 21, or a control function 21' which primarily controls a function other than that which controls and switches the control unit 4, whereby switching takes place during the maintenance or activation of the control function on one of the control levers B1, B2 for a time that is longer than a predetermined threshold time Tta.

For example, in one embodiment, such a control function would be associated with a start and stop function or similar more or less subordinate function for a tool carried by the demolition robot (1).

It should be understood that the associated remote control unit 3 can be sold separately to the demolition robot 1 or as an additional accessory or spare part.

## Claims

1. Remotely controlled demolition robot (1) comprising a control unit (4), an undercarriage (7) with propulsion means (8), an upper carriage (6) with a maneuverable arm means (11) which on a tower is pivotable in a horizontal plane and a remote control unit (3) having a first and a second control lever (B1, B2) and an operating mode selector switch (18) which allows an operator (2) to switch between alternative operating modes, the remote control unit (3) being arranged to give commands to the control unit (4) via the operating mode selector switch (18) to control the demolition robot in alternative operating modes by means of the control levers (B1, B2), **characterized in that** the operating mode selector switch (18) on the remote control unit (3) forms a primary operating mode selector switch and that one of the control levers (B2) exhibits a complementary secondary operating mode selector switch (20) with such placement on the control lever (B2) that it is accessible for activation without the operator (2) needing to release his grip on the control lever and which, upon activation, momentarily switches the control unit (4) from the operating mode dedicated by the primary operating mode selector switch (18) to a temporary alternative operating mode whereby the momentarily switch is active as long as the secondary operating mode selector switch (20) is activated.

2. Demolition robot according to claim 1, wherein the secondary operating mode selector switch (20) is configured to give commands to the control unit (4) to control the demolition robot in an alternative momentary operating mode in which the undercarriage (7) or the upper carriage (6) can be steered and controlled by means of the control levers (B1, B2).

3. Demolition robot according to any one of claims 1 - 2, wherein switching to temporary alternative operating mode is limited to the extent that each control lever (B1, B2) must be in zero or neutral position before switching can take place.

4. Demolition robot according to any one of the claims 1 - 3, wherein switching to temporary alternative operating mode is limited to the extent that switching can only take place after activation of the secondary operating mode selector switch (20) for a longer time (ta) than a predetermined threshold time (Tta).

5. Demolition robot according to any of the claims 1 - 4, wherein upon deactivation of the secondary operating mode selector switch (20), the control unit (4) automatically returns to the previously prevailing operating mode dedicated by the primary operating mode selector switch (18).

6. Demolition robot according to any of the claims 1 - 5, wherein the control unit (4) automatically returns to the previously dedicated operating mode only when each control lever (B1, B2) is in the zero or centered position upon deactivation of the secondary operating mode selector switch (20, 21, 21 ').

7. Demolition robot according to any one of the claims 1 - 6, wherein the secondary operating mode selector switch (20) is located on a front side of the right control lever (B2) where the operator's (2) fingers rest.

8. Demolition robot according to any of the claims 1 - 6, wherein the secondary operating mode selector switch (20) comprises any of the following means;
- a finger control switch (20),
- a thumb control switch (21),
- a control function (21') which primarily controls a function other than the one that controls and switches the control unit (4), whereby switching takes place when maintaining the control function on one of the control levers (B1, B2) for a time (ta) which is longer than a predetermined threshold time (Tta),

9. Demolition robot according to claim 8, wherein the control function (21') is associated with a top control switch (17) which is included in one of the control levers (B1, B2) and is intended to be operated with one of the operator's (2) thumbs.

10. Demolition robot according to claim 8, wherein the control function (21') is associated with a start and stop function for a tool carried by the demolition robot (1).

11. Method for controlling and operating a remote-controlled demolition robot (1) by means of a first and a second lever control (B1, B2) and a control unit (4), whereby an operator (2) by means of an operating mode selector switch (18) can switch between different selectable operating modes so that the lever controls (B1, B2) control different movements and functions of the demolition robot depending on the prevailing operating mode of the control unit (4), **characterized in that** an operating mode prevailing in the control unit (4) can be momentarily overrided by activating an arranged complementary secondary operating mode control switch (20) which is given such placement on a control lever (B2) that it is accessible for activation without the operator (2) needing to release his grip on the control lever (B2), the shift being active as long as said complementary operating mode control switch (20) is activated.

12. Remote control unit (3) with controls in the form of a first and second control lever (B1, B2) used for controlling a demolition robot (1), and a primary operating mode selector switch (18) that allows an operator (2) to give commands to the control unit (4) to control the demolition robot in alternative operating modes where the lever controls, control different movements of the demolition robot, **characterized in that** the remote control unit includes a finger-activated secondary operating mode selector switch (20) on one of the control levers (B2) which can momentarily override a dedicated operating mode prevailing in the control unit (4) whereby the momentary change of operating mode is active as long as said secondary operating mode control switch (20) is activated.
